# EUROPÄISCHE PATENTSCHRIFT

(11) **EP 3 230 089 B1**
(45) Veröffentlichungstag und Bekanntmachung des Hinweises auf die Patenterteilung: **19.12.2018**
(21) Anmeldenummer: 15766849.2
(22) Anmeldetag: 23.09.2015
(51) Int. Cl.: B60C 11/04

(54) **FAHRZEUGLUFTREIFEN MIT ZICKZACKVERLAUFSMUSTER**
VEHICLE TIRE WITH ZIG ZAG PATTERN
PNEUMATIQUE DE VÉHICULE AVEC UN MOTIF DE PROFIL EN ZIGZAG

(30) Priorität: 11.12.2014 DE 102014225615
(43) Veröffentlichungstag der Anmeldung: 18.10.2017
(73) Patentinhaber: Continental Reifen Deutschland GmbH, 30165 Hannover (DE)
(72) Erfinder: BEHR, Ulrich, 30167 Hannover (DE); DOMSCHEIT, Andreas, 30459 Hannover (DE); RITTWEGER, Stefan, 30826 Garbsen (DE)
(74) Vertreter: Preusser, Andrea
(86) Internationale Anmeldenummer: PCT/EP2015/071809
(87) Internationale Veröffentlichungsnummer: WO 2016/091411

(56) Entgegenhaltungen:
- EP-A1- 0 578 216
- EP-A1- 0 681 929
- EP-A2- 0 148 151
- WO-A1-01/39993

## Beschreibung

Die Erfindung betrifft einen Fahrzeugluftreifen mit einem Laufstreifen mit zumindest zwei in Umfangsrichtung umlaufenden Umfangsrillen, welche von Randkanten an Profilpositiven begrenzt sind und welche im Wesentlichen zickzackförmig mit einer abwechselnden Aufeinanderfolge von kurzen und langen Abschnitten verlaufen, wobei die Umfangsrillen jeweils zwei einander gegenüberliegende Rillenflanken und einen zwischen den Rillenflanken gebildeten Rillengrund aufweisen, dessen Zickzackverlauf dem Zickzackverlauf an der Profiloberfläche folgt, wobei sowohl die Randkanten als auch der Rillengrund entlang einer gerundeten Zickzackform verlaufen.
Ein Fahrzeugluftreifen der eingangs genannten Art, welcher ein Nutzfahrzeugreifen ist, ist aus der WO 01/39993 A1 bekannt. Daher umfasst der Oberbegriff des Anspruch 1 sämtliche bekannte Merkmale aus diesem Dokument WO 01/39993 A1. Der Laufstreifen dieses Reifens ist mit drei Umfangsrillen und mit Umfangsrippen versehen, welche von Randkanten begrenzt sind, die im Wesentlichen zickzackförmig mit einer abwechselnden Aufeinanderfolge von kurzen und langen Abschnitten verlaufen. Im Bereich jedes zweiten "Zackens" jeder Rillenflanke sind einander im Wesentlichen gegenüberliegende, in Draufsicht in die Umfangsrippen hineinragende Einbuchtungen ausgebildet. Dieser Reifen soll vor allem für das Fahren auf unbefestigten Straßen geeignet sein.
Ein weiterer Fahrzeugluftreifen der eingangs genannten Art, welcher ein PKW- oder Light-Truck-Reifen ist, ist aus der EP 0 681 929 A1 bekannt. Im Laufstreifen dieses Reifens verlaufen drei in Draufsicht zickzackförmige Umfangsrillen, wobei sich eine dieser Umfangsrillen im Bereich des Reifenzenits erstreckt und die beiden anderen Umfangsrillen in je einer der Laufstreifenhälften verlaufen. Die in den beiden Laufstreifenhälften verlaufenden Umfangsrillen sind breiter ausgeführt als die im Bereich des Reifenzenits verlaufende Umfangsrille und sollen zur Verbesserung der Aquaplaningeigenschaften beitragen.

Aus der EP 0 148 151 A2 ist ein Fahrzeugluftreifen bekannt, welcher insbesondere ein Nutzfahrzeugreifen ist und einen Laufstreifen mit in Draufsicht zickzack-förmig verlaufenden Umfangsrillen aufweist. Die Umfangsrillen weisen Rillenflanken auf, welche sich in Umfangsrichtung abwechselnd aus, im Querschnitt betrachtet, in radialer Richtung ausgerichteten Abschnitten und zur radialen Richtung geneigten Abschnitten zusammensetzen. An den Eckbereichen der Zickzackform der Umfangsrillen sind an den unterschiedlichen Rillenflanken einander gegenüberliegende, in Draufsicht dreieckige Vorsprünge und Einbuchtungen ausgebildet. In derart ausgeführten Umfangsrillen sollen sich Fremdkörper, beispielsweise Steine, nicht verklemmen.

Ferner offenbart die EP 0 578 216 A1 einen beispielsweise für einen Light-Truck vorgesehenen Fahrzeugluftreifen, welcher einen asymmetrischen Laufstreifen mit unterschiedlich ausgeführten zickzackförmigen Umfangsrillen aufweist. Der Reifen soll insbesondere für das Fahren auf Matsch und Schnee geeignet sein.

Zickzack- oder wellenförmig in Umfangsrichtung umlaufende Umfangsrillen in Laufstreifen von Fahrzeugluftreifen sind somit in unterschiedlichen Ausführungsvarianten bekannt. Insbesondere bei Fahrzeugluftreifen, wie beispielsweise Reifen für Fahrzeuge mit Vierradantrieb, Reifen für SUVs oder andere, für Offroad-Bedingungen geeignete Fahrzeuge, wird mit Umfangsrillen mit ausgeprägtem Zickzackverlauf eine gute Traktionsfähigkeit sichergestellt, um ein sicheres Fahren in unwegsamem Gelände, abseits von Straßen, zu gewährleisten. Der Zickzackverlauf der Umfangsrillen bedingt jedoch die Generierung eines gewissen Anteiles vom Abrollgeräusch.

Der Erfindung liegt die Aufgabe zugrunde, Umfangsrillen in Laufstreifen der eingangs genannten Art derart zu gestalten, dass eine gute Traktionsfähigkeit erhalten bleibt, jedoch die Umfangsrillen ein geringeres Abrollgeräusch generieren.

Gelöst wird die gestellte Aufgabe erfindungsgemäß dadurch, dass der axiale Versatz des Zickzacks an den Randkanten der Umfangsrillen geringer ist als der axiale Versatz des Zickzacks des Rillengrundes.

Erfindungsgemäß ausgeführte Umfangsrillen sind daher derart gestaltet, dass im Inneren der Umfangsrillen durch den ausgeprägteren Zickzack des Rillengrundes eine gute Traktionsfähigkeit gewährleistet ist, der "sanftere" Zickzackverlauf an der Profiloberfläche trägt dazu bei, das Abrollgeräusch zu reduzieren, da hier der Anteil an Querkanten gering ist.

Bei einer bevorzugten Ausführungsform der Erfindung beträgt der axiale Versatz des Zickzacks der Randkanten 2 mm bis 5 mm, der axiale Versatz des Zickzacks des Rillengrundes 4 mm bis 8 mm. Derart vergleichsweise geringe Abweichungen im axialen Versatz zwischen dem Zickzack des Rillengrundes und dem Zickzack der Randkanten reichen aus, die Traktion merklich zu verbessern.

Bevorzugt ist ferner eine Ausführung, bei der der Rillengrund im langen Abschnitt derart verläuft, dass er an dem einen Ende des langen Abschnittes in dessen Mitte beginnt und sich in Richtung des anderen Endes des langen Abschnittes der einen Randkante annähert. Dadurch reicht bereits ein relativ geringer axialer Versatz des Zickzacks der Randkanten zur Erzielung eines vergleichsweise großen axialen Versatzes des Zickzacks des Rillengrundes. In diesem Zusammenhang ist es auch vorteilhaft, wenn der Rillengrund in seinem Verlauf im langen Abschnitt seine Breite kontinuierlich verringert, wobei die Breite mit seiner Annäherung an die Randkante geringer wird.

Für die Stabilität des Laufstreifens ist es dabei günstig, wenn der Rillengrund in seinem Verlauf im kurzen Abschnitt eine Engstelle aufweist, deren Breite vorzugsweise höchstens 1,5 mm beträgt.

Für das Abrollgeräusch auf ebenem Untergrund, auf Straßen, ist es vorteilhaft, wenn die Randkanten im langen Abschnitt einen zueinander leicht konvex gekrümmten Verlauf aufweisen. Vorzugsweise beträgt dabei der gegenseitige Abstand der Randkanten an den Endbereichen des langen Abschnittes 8 mm bis 12 mm.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Schrägansicht eines Umfangsabschnittes eines Bereiches eines Laufstreifens eines Fahrzeugluftreifens,
Fig. 2 eine Draufsicht auf einen Abschnitt einer Umfangsrille aus Fig. 1,
Fig. 3 einen Schnitt entlang der Linie III-III der Fig. 2 und
Fig. 4 einen Schnitt entlang der Linie IV-IV der Fig. 2.

Die Erfindung befasst sich mit einer speziellen Ausgestaltung von Laufstreifen von Fahrzeugluftreifen für Personenkraftwagen, insbesondere für solche, die auch für den Geländeeinsatz vorgesehen und geeignet sind, beispielsweise Fahrzeuge mit Vierradantrieb und sogenannte SUVs (Sports Utility Vehicles). Erfindungsgemäß ausgeführte Fahrzeugluftreifen sind von ihrem Aufbau her Radialreifen mit den für solche Reifen üblichen Bauteilen.

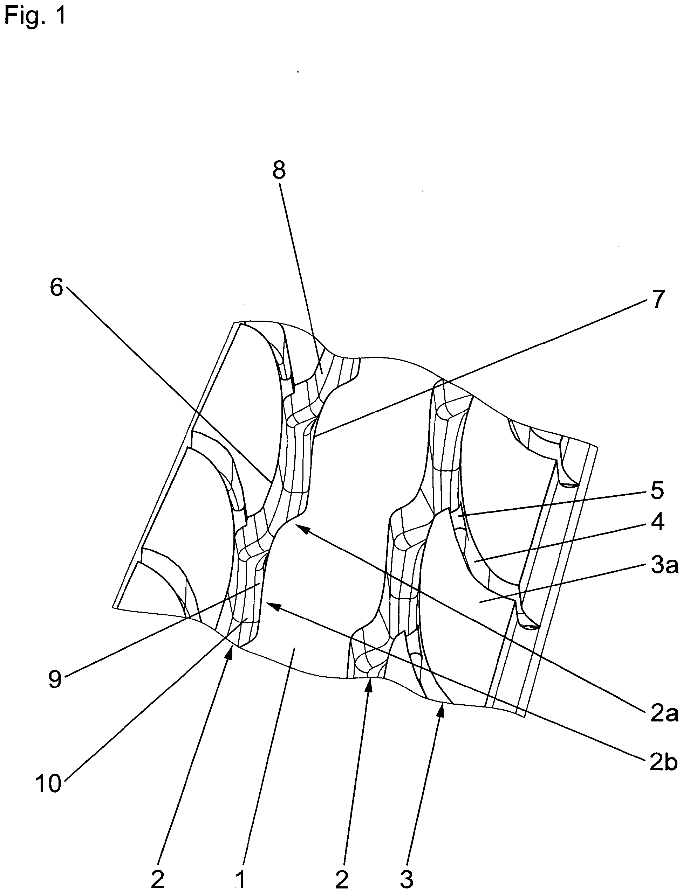

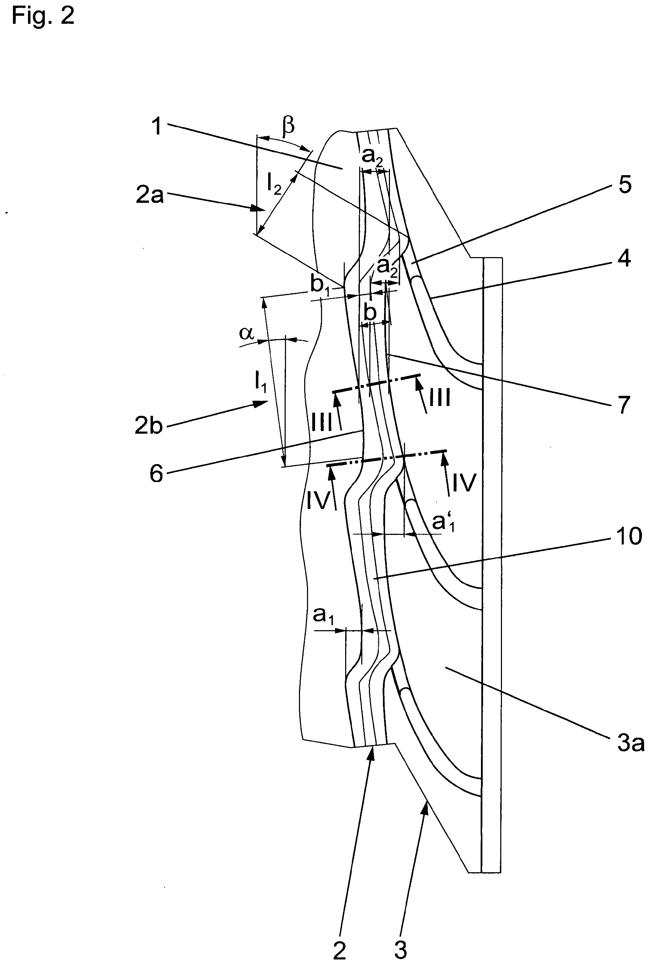

Fig. 1 und Fig. 2 zeigen einen Umfangsabschnitt eines Bereiches eines Laufstreifens, wobei ein Profilband 1 dargestellt ist, welches von Umfangsrillen 2 begrenzt ist, welche
ihrerseits weitere Profilpositive, wie beispielsweise die hier angedeuteten Profilblockreihen 3, begrenzen. Die Profilblockreihen 3 sind in Profilblöcke 3a gegliedert, zwischen welchen Rillen 4 verlaufen, die in die Umfangsrillen 2 münden. In den Mündungsbereichen können, wie angedeutet, Grundanhebungen 5 vorgesehen sein, dies sind Gummibrücken, die in Umfangsrichtung benachbarte Blöcke 3a lokal miteinander verbinden und die Tiefe der Rillen 4 an diesen Stellen daher verringern. Die
Umfangsrillen 2 weisen einen Zickzackverlauf mit abwechselnd kurzen und langen Abschnitten 2a, 2b auf, wobei die Erstreckung l₁ der langen Abschnitte 2b das Drei- bis Sechsfache der Erstreckung l₂ der kurzen Abschnitte 2a beträgt. Die jede Umfangsrille 2 an der Oberfläche begrenzenden Randkanten 6, 7, von denen jeweils die profilaußenseitig gelegene Randkante 7 bei den Einmündungen der Rillen 4 unterbrochen ist, verlaufen in den Abschnitten 2a, 2b jeweils entlang einer gerundeten Zickzackform. Die Randkanten 6, 7 sind gleichzeitig die in Umfangsrichtung verlaufenden Kanten der Profilpositive 1 und 3, wobei die Rillen 4 im Bereich der kurzen Abschnitte 2a einmünden. Jede Umfangsrille 2 weist ferner Rillenflanken 8, 9 und einen Rillengrund 10 auf, welcher in den Abschnitten 2a, 2b ebenfalls entlang eines gerundeten Zickzackweges verläuft. Die Rillenflanken 8, 9 verbinden die Randkanten 6, 7 mit dem Rillengrund 10 und sind Flächen, die im Querschnitt durch die Umfangsrille 2 - an beliebigen Stellen - einen zumindest im Wesentlichen geraden Verlauf aufweisen. Sind die Randkanten 6, 7 in bekannter Weise mit Fasen versehen, verbinden die Rillenflanken 8, 9 die Fasen mit dem Rillengrund 10.

Im längeren Abschnitt 2b verlaufen die Randkanten 6 und 7 derart, dass ihr gegenseitiger Abstand bis etwa zur Mitte des längeren Abschnittes 2b geringer wird. An den breiteren Stellen bei den Enden des Abschnittes 2b beträgt der gegenseitige Abstand b der Randkanten 6, 7 in der Größenordnung von 8 mm bis 12 mm, im mittleren Bereich um 1 mm bis 2 mm weniger. Die Randkanten 6, 7 verlaufen ferner im längeren Abschnitt 2b zueinander leicht konvex gekrümmt und erstrecken sich unter einem spitzen Winkel α von bis zu 10° zur Umfangsrichtung. Der kurze Abschnitt 2a ist im Wesentlichen zwischen gerundeten Knickstellen der Randkanten 6, 7 gebildet und ist bezüglich der Umfangsrichtung gegensinnig zum Abschnitt 2b geneigt. Die kurzen Abschnitte 2a erstrecken sich im Wesentlichen unter einem Winkel β von 20° bis 35° zur Umfangsrichtung. Im Bereich der Randkanten 6, 7 beträgt der durch den Zickzackverlauf vorliegende axiale Versatz a₁, a₁'(der größte axiale Abstand im Verlauf jeder Randkante 6, 7) 2 mm bis 5 mm, wobei a₁, a₁' gleich groß oder geringfügig unterschiedlich groß sein können.

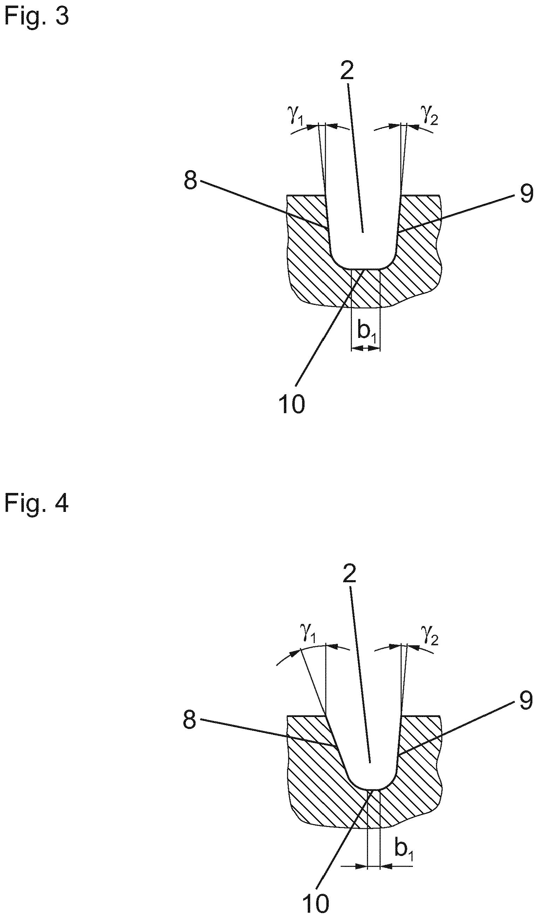

Wie die Schnittdarstellungen in Fig. 3 und 4 zeigen, geht der Rillengrund 10 über Rundungen in die die Umfangsrillen 2 begrenzenden Rillenflanken 8, 9 über. Der Rillengrund 10 ist bei der gezeigten Ausführung im Querschnitt gerade, kann jedoch auch leicht gerundet ausgeführt sein. An den einen, jeweils den gleichen Enden der Abschnitte 2b befindet sich der Rillengrund 10 etwa mittig zwischen den Rillenflanken 8, 9, an den anderen Enden näher an der Randkante 7, wobei die Breite b₁ des Rillengrundes 10 in seinem Verlauf in den Abschnitten 2b kontinuierlich geringer wird, insbesondere nimmt die Breite b₁ von 2,5 mm bis 3,0 mm auf 2,0 mm bis 2,5 mm ab. Dadurch ändern sich die Winkel γ₁, γ₂ der Rillenflanken 8, 9 zur radialen Richtung über ihren Verlauf im Abschnitt 2b, wobei der Winkel γ₁ der Rillenflanke 8 zwischen der schmalen Mitte des Abschnittes 2b und jenem Endbereich des Abschnittes 2b, wo der Rillengrund 10 seine schmalste Stelle in diesem Abschnitt 2b aufweist, größer wird, insbesondere von 3° bis 7° auf 12° bis 25° zunimmt.

Im Abschnitt 2a verläuft der Rillengrund 10 im Wesentlichen parallel zur Randkante 7. Dabei weist der Rillengrund 10 im Abschnitt 2b etwa mittig eine Engstelle auf, in welcher der Rillengrund 10 eine Breite von maximal 1,5 mm aufweist, die Übergänge zur Engstelle erfolgen kontinuierlich. Im Abschnitt 2b nimmt daher der Neigungswinkel γ₁ der Rillenflanke 8 in Richtung zum nächsten Abschnitt 2b wieder ab. Der Winkel γ₂ der zweiten Rillenflanke 9 zur radialen Richtung kann über die gesamte Umfangserstreckung der Umfangsrille 2 im Wesentlichen gleich groß bleiben oder geringfügig, in einem Bereich von ± 2°, variieren. Der durch den Zickzackverlauf vorliegende axiale Versatz a₂ (der größte axiale Abstand im Verlauf jedes Rillengrundrandes) des Rillengrundes 10 ist größer als der axiale Versatz a₁, a₁' der Randkanten 6, 7 und beträgt 5 mm bis 8 mm. Durch die spezielle Rillengeometrie wird die Stabilität der Profilpositive derart beeinflusst, dass eine gute Traktion, insbesondere auch beim Fahren im Gelände, abseits von Straßen, sichergestellt ist. Die weniger ausgeprägte Zickzackform an der Laufstreifenoberfläche reduziert den Anteil an Querkanten, was für die Geräuschentwicklung beim Abrollen des Reifens vorteilhaft ist.

### Bezugsziffernliste

- 1: Profilband
- 2: Umfangsrille
- 2a: Abschnitt
- 2b: Abschnitt
- 3: Profilblockreihe
- 3a: Profilblöcke
- 4: Rille
- 5: Grundanhebung
- 6: Randkante
- 7: Randkante
- 8: Rillenflanke
- 9: Rillenflanke
- 10: Rillengrund
- a₁, a₁', a₂: Versatz
- b, b₁: Breite
- α, β: Winkel
- γ₁, γ₂: Winkel

## Patentansprüche

1. Fahrzeugluftreifen mit einem Laufstreifen mit zumindest zwei in Umfangsrichtung umlaufenden Umfangsrillen (2), welche von Randkanten (6, 7) an Profilpositiven begrenzt sind und welche im Wesentlichen zickzackförmig mit einer abwechselnden Aufeinanderfolge von kurzen und langen Abschnitten (2a, 2b) verlaufen, wobei die Umfangsrillen (2) jeweils zwei einander gegenüberliegende Rillenflanken (8, 9) und einen zwischen den Rillenflanken (8, 9) gebildeten Rillengrund (10) aufweisen, dessen Zickzackverlauf dem Zickzackverlauf an der Profiloberfläche folgt, wobei sowohl die Randkanten (6, 7) als auch der Rillengrund (10) entlang einer gerundeten Zickzackform verlaufen,
**dadurch gekennzeichnet,**
**dass** der axiale Versatz (a₁, a₁') des Zickzacks an den Randkanten (6, 7) der Umfangsrillen (2) geringer ist als der axiale Versatz (a₂) des Zickzacks des Rillengrundes (10).

2. Fahrzeugluftreifen nach Anspruch 1, **dadurch gekennzeichnet, dass** der axiale Versatz (a₁, a₁') des Zickzacks der Randkanten (6, 7) 2 mm bis 5 mm beträgt.

3. Fahrzeugluftreifen nach Anspruch 1 oder 2, **dadurch gekennzeichnet, dass** der axiale Versatz (a₂) des Zickzacks des Rillengrundes (10) 5 mm bis 8 mm beträgt.

4. Fahrzeugluftreifen nach einem der Ansprüche 1 bis 3, **dadurch gekennzeichnet, dass** der Rillengrund (10) im langen Abschnitt (2b) derart verläuft, dass er an dem einen Ende des langen Abschnittes (2b) in dessen Mitte beginnt und sich in Richtung des anderen Endes des langen Abschnittes (2b) der einen Randkante (7) annähert.

5. Fahrzeugluftreifen nach einem der Ansprüche 1 bis 4, **dadurch gekennzeichnet, dass** der Rillengrund (10) in seinem Verlauf im langen Abschnitt (2b) seine Breite (b₁) kontinuierlich verringert, wobei die Breite mit seiner Annäherung an die Randkante (7) geringer wird.

6. Fahrzeugluftreifen nach einem der Ansprüche 1 bis 5, **dadurch gekennzeichnet, dass** der Rillengrund (10) in seinem Verlauf im kurzen Abschnitt (2a) eine Engstelle aufweist.

7. Fahrzeugluftreifen nach Anspruch 6, **dadurch gekennzeichnet, dass** die Breite des Rillengrundes (10) an der Engstelle höchstens 1,5 mm beträgt

8. Fahrzeugluftreifen nach einem der Ansprüche 1 bis 7, **dadurch gekennzeichnet, dass** die Randkanten (6, 7) im langen Abschnitt (2b) einen zueinander leicht konvex gekrümmten Verlauf aufweisen.

9. Fahrzeugluftreifen nach einem der Ansprüche 1 bis 8, **dadurch gekennzeichnet, dass** sich die Breite (b₁) des Rillengrundes (10) im langen Abschnitt (2b) von 2,5 mm bis 3 mm auf 2,0 mm bis 2,5 mm ändert.

10. Fahrzeugluftreifen nach einem der Ansprüche 1 bis 9, **dadurch gekennzeichnet, dass** der gegenseitige Abstand der Randkanten (6, 7) an den Endbereichen des langen Abschnittes (2b) und im kurzen Abschnitt (2a) 8 mm bis 12 mm beträgt.

## Claims

1. Pneumatic vehicle tire, comprising a tread having at least two circumferential grooves (2), which encircle the tire in the circumferential direction, are delimited by boundary edges (6, 7) on profile positives and extend substantially in a zig-zag shape with an alternating sequence of short and long segments (2a, 2b), wherein each of the circumferential grooves (2) has two opposite groove flanks (8, 9) and a groove base (10), which is formed between the groove flanks (8, 9) and the zig-zag course of which follows the zig-zag course on the profile surface, wherein both the boundary edges (6, 7) and the groove base (10) extend along a rounded zig-zag shape,
**characterized in that**
the axial offset (a₁, a₁') of the zig-zag at the boundary edges (6, 7) of the circumferential grooves (2) is less than the axial offset (a₂) of the zig-zag of the groove base (10).

2. Pneumatic vehicle tire according to Claim 1, **characterized in that** the axial offset (a₁, a₁') of the zig-zag of the boundary edges (6, 7) is 2 mm to 5 mm.

3. Pneumatic vehicle tire according to Claim 1 or 2, **characterized in that** the axial offset (a₂) of the zig-zag of the groove base (10) is 5 mm to 8 mm.

4. Pneumatic vehicle tire according to one of Claims 1 to 3, **characterized in that** the groove base (10) extends in such a way in the long segment (2b) that it begins at the center of the long segment (2b) at one end thereof and approaches one boundary edge (7) in the direction of the other end of the long segment (2b) .

5. Pneumatic vehicle tire according to one of Claims 1 to 4, **characterized in that** the width (b₁) the groove base (10) decreases continuously over the course thereof in the long segment (2b), wherein the width decreases as the groove base approaches the boundary edge (7).

6. Pneumatic vehicle tire according to one of Claims 1 to 5, **characterized in that** the groove base (10) has a narrow point along its course in the short segment (2a) .

7. Pneumatic vehicle tire according to Claim 6, **characterized in that** the width of the groove base (10) at the narrow point is at most 1.5 mm.

8. Pneumatic vehicle tire according to one of Claims 1 to 7, **characterized in that** the boundary edges (6, 7) in the long segment (2b) have a slightly convexly curved course relative to one another.

9. Pneumatic vehicle tire according to one of Claims 1 to 8, **characterized in that** the width (b₁) of the groove base (10) in the long segment (2b) changes from 2.5-3 mm to 2.0-2.5 mm.

10. Pneumatic vehicle tire according to one of Claims 1 to 9, **characterized in that** the mutual spacing of the boundary edges (6, 7) in the end regions of the long segment (2b) and in the short segment (2a) is 8 mm to 12 mm.

## Revendications

1. Pneumatique de véhicule comprenant une bande de roulement dotée d'au moins deux rainures périphériques (2) s'étendant dans la direction périphérique, lesquelles sont délimitées par des arêtes de bord (6, 7) sur des éléments de sculpture en relief et lesquelles s'étendent sensiblement en zigzag suivant une séquence alternée de parties courtes et longues (2a, 2b), les rainures périphériques (2) comprenant respectivement deux flancs de rainure (8, 9) en regard l'une de l'autre et un fond de rainure (10) formé entre les flancs de rainure (8, 9), fond de rainure dont le tracé en zigzag suit le tracé en zigzag au niveau de la surface de sculpture, à la fois les arêtes de bord (6, 7) et le fond de rainure (10) s'étendant le long d'une forme de zigzag arrondie,
**caractérisé en ce que**
le décalage axial (a₁, a₁') du zigzag au niveau des arêtes de bord (6, 7) des rainures périphériques (2) est inférieur au décalage axial (a₂) du zigzag du fond de rainure (10).

2. Pneumatique de véhicule selon la revendication 1, **caractérisé en ce que** le décalage axial (a₁, a₁') du zigzag au niveau des arêtes de bord (6, 7) est de 2 mm à 5 mm.

3. Pneumatique de véhicule selon la revendication 1 ou 2, **caractérisé en ce que** le décalage axial (a₂) du zigzag du fond de rainure (10) est de 5 mm à 8 mm.

4. Pneumatique de véhicule selon l'une quelconque des revendications 1 à 3, **caractérisé en ce que** le fond de rainure (10) s'étend dans la partie longue (2b) de telle sorte qu'il commence, à l'une des extrémités de la partie longue (2b), en son centre et se rapproche de l'une des arêtes de bord (7) en direction de l'autre extrémité de la partie longue (2b) .

5. Pneumatique de véhicule selon l'une quelconque des revendications 1 à 4, **caractérisé en ce que** la largeur (b₁) du fond de rainure (10) est réduite de manière continue dans son tracé dans la partie longue (2b), la largeur étant réduite au fur et à mesure que l'on se rapproche de l'arête de bord (7) .

6. Pneumatique de véhicule selon l'une quelconque des revendications 1 à 5, **caractérisé en ce que** le fond de rainure (10) présente un étranglement dans son tracé dans la partie courte (2a).

7. Pneumatique de véhicule selon la revendication 6, **caractérisé en ce que** la largeur du fond de rainure (10) est d'au maximum 1,5 mm au niveau de l'étranglement.

8. Pneumatique de véhicule selon l'une quelconque des revendications 1 à 7, **caractérisé en ce que** les arêtes de bord (6, 7) présentent un tracé légèrement convexe l'une par rapport à l'autre dans la partie longue (2b).

9. Pneumatique de véhicule selon l'une quelconque des revendications 1 à 8, **caractérisé en ce que** la largeur (b₁) du fond de rainure (10) dans la partie longue (2b) varie de 2,5 mm à 3 mm à 2,0 mm à 2,5 mm.

10. Pneumatique de véhicule selon l'une quelconque des revendications 1 à 9, **caractérisé en ce que** l'écartement mutuel des arêtes de bord (6, 7) au niveau des régions d'extrémité de la partie longue (2b) et dans la partie courte (2a) est de 8 mm à 12 mm.
